# FASCICULE DE BREVET EUROPEEN

(11) **EP 4 003 718 B1**
(45) Date de publication et mention de la délivrance du brevet: **06.12.2023**
(21) Numéro de dépôt: 20750701.3
(22) Date de dépôt: 08.07.2020
(51) Int. Cl.: B29D 30/06

(54) **INSERT POUR ÉLÉMENT DE GARNITURE DE MOULE POUR PNEUMATIQUES**
EINSATZ FÜR EIN AUSKLEIDUNGSELEMENT EINER REIFENFORM
INSERT FOR TYRE MOULD LINING ELEMENT

(30) Priorité: 24.07.2019 FR 1908375
(43) Date de publication de la demande: 01.06.2022
(73) Titulaire: COMPAGNIE GENERALE DES ETABLISSEMENTS MICHELIN, 63000 Clermont-Ferrand (FR)
(72) Inventeur: BARDIN, Damien, 63040 Clermont-Ferrand Cedex 09 (FR); MICHNO, Jaroslaw, 63040 Clermont-Ferrand Cedex 09 (FR); MAJEWSKA, Anna, 63040 Clermont-Ferrand Cedex 09 (FR); KONOBROCKI, Dariusz, 63040 Clermont-Ferrand Cedex 09 (FR)
(74) Mandataire: M.F.P. Michelin
(86) Numéro de dépôt international: PCT/FR2020/051215
(87) Numéro de publication internationale: WO 2021/014066

(56) Documents cités:
- WO-A1-2015/086974
- WO-A1-2019/122561

## Description

La présente invention concerne la fabrication des pneumatiques et, plus particulièrement, le domaine des moules de cuisson utilisés dans une étape de cuisson d'un pneumatique.

La fabrication d'un pneumatique comprend une étape de cuisson, pendant laquelle une ébauche de pneumatique est moulée et vulcanisée pour donner au pneumatique ses caractéristiques mécaniques, sa géométrie et son aspect final.

La cuisson du pneumatique s'effectue généralement dans un moule de cuisson pour pneumatiques. Le moule forme une surface interne destinée à former la surface externe du pneumatique. En particulier, le moule comprend une garniture destinée à former tout ou partie de la sculpture du pneumatique.

La garniture comprend généralement une pluralité d'éléments de garniture disposés circonférentiellement. La garniture est en appui par sa surface radialement externe sur un anneau du moule. La surface radialement interne de la garniture comporte des motifs en creux et en protubérances. Les motifs en protubérances sont généralement formés par des lames destinées à former des sillons sur la sculpture du pneumatique.

De manière connue, les lames s'étendent circonférentiellement et/ou axialement, sur la surface radialement interne de la garniture, et se croisent de manière à former et délimiter des motifs en protubérances, généralement parallélépipédiques, sur la sculpture du pneumatique.

Les éléments de garniture sont généralement réalisés dans un matériau tel que l'aluminium, et obtenus par un procédé de fonderie métallique.

Il a été constaté que les motifs en protubérances comportant des parois minces, ou les motifs comportant des formes complexes sont difficilement réalisables par un procédé de fonderie. Un procédé de fonderie présente donc l'inconvénient de limiter la variété des motifs formant la surface radialement interne de la garniture.

Pour remédier à cela, on connait un procédé de fabrication d'un élément de garniture comportant des inserts. Les inserts sont obtenus selon un procédé de fabrication permettant l'obtention de motifs en protubérances comportant des parois minces, ou des formes complexes, tel un procédé d'usinage, un procédé d'emboutissage ou un procédé de fabrication additive. Puis, le corps de l'élément de garniture est surmoulé autour de la base des inserts.

Comme évoqué précédemment, les motifs en protubérance de la garniture peuvent se croiser. Par exemple, une lame en venue de matière avec le corps de l'élément de garniture, peut rencontrer un insert prenant la forme d'une lamelle. Ainsi, la lame est également surmoulée contre l'insert. La lame et l'insert se rencontrent alors le long d'une ou plusieurs surfaces de contact s'étendant sur la surface externe de l'insert.

Toutefois, la surface de contact de forme complexe entre la lame et l'insert peut causer des défauts de moulage de la lame telles des non-venues de matière qui affaiblissent le maintien de l'insert par la lame, ou des bavures qui peuvent causer des défauts de moulage du pneumatique.

Ainsi, il est nécessaire de prévoir sur tout ou partie de la lame une surépaisseur de matière d'épaisseur suffisante, afin éviter les défauts de moulage et ainsi améliorer le maintien de l'insert.

Néanmoins, la surépaisseur a pour conséquence d'augmenter l'épaisseur de la sculpture du pneumatique ou de réduire la profondeur de l'entaille formée par l'insert, pénalisant ainsi les performances du pneumatique telle la résistance au roulement ou la durée de vie.

Par ailleurs, la surépaisseur de la lame forme une discontinuité entre les sillons de la sculpture du pneumatique pouvant être à l'origine de fissures pénalisant, là encore, les performances du pneumatique.

Enfin, la surépaisseur nécessite de prévoir davantage de matière pour la réalisation de la garniture ou de la sculpture du pneumatique.
Un tel insert pour un élément de garniture de moule pour pneumatiques est connu du document de brevet WO 2019/122561 de l'état de la technique.

C'est donc un objectif de l'invention de remédier à l'ensemble de ces inconvénients.

Cet objectif est atteint par l'invention qui propose un insert destiné à entrer dans la composition d'un élément de garniture, et à former une partie de la surface de moulage dudit élément de garniture, ladite surface de moulage comportant au moins une intersection d'au moins un premier et un deuxième motif en protubérance, l'insert étant caractérisé en ce qu'il comprend une jonction destinée à être jointe avec un élément de moulage en venue de matière avec le corps de l'élément de garniture, la jonction divisant le deuxième motif en une première et une deuxième partie, l'insert formant le premier motif et la première partie du deuxième motif et l'élément de moulage formant la deuxième partie du deuxième motif, la jonction s'écartant de l'intersection.

La jonction permet d'écarter la surface de contact entre l'insert et l'élément de moulage du corps de l'élément de garniture, de l'intersection de forme complexe. On dissocie ainsi la surface de moulage des motifs des éléments matériels qui les forment, et on évite les défauts de moulage lors du surmoulage de l'élément de moulage contre la jonction. De plus, il n'est pas nécessaire de prévoir une surépaisseur afin d'éviter les défauts de moulage. Ainsi, on utilise la quantité de matière strictement nécessaire à la formation des motifs en protubérance. La jonction permet d'obtenir une garniture présentant une bonne qualité de moulage. La qualité de moulage du corps de l'élément de garniture au voisinage de la jonction permet un bon maintien de l'insert.

Avantageusement, la jonction prend la forme d'une enveloppe de la surface de l'intersection.

L'enveloppe prend une forme généralement lisse et aplatie couvrant l'intersection. Ainsi, la surface de contact de la jonction est de forme simplifiée par rapport à celle de l'intersection. La forme de la jonction est choisie de manière à ce que l'élément de moulage, surmoulé sur la surface de la jonction de l'insert, ne comporte pas, au voisinage de la jonction, de parties minces ni de formes complexes difficiles à mouler.

De préférence, l'enveloppe est disposée par rapport à la surface de l'intersection de manière à minimiser le volume de la première partie du deuxième motif.

Ainsi, le volume de matière nécessaire à la fabrication de l'insert est minimisé, et le coût de fabrication de l'insert est réduit, notamment lorsque l'insert est fabriqué par un procédé de fabrication additive.

Avantageusement, la jonction comprend des moyens de maintien de l'insert par rapport à l'élément de moulage.

Selon une première variante, les moyens de maintien de l'insert comprennent au moins un élément en creux destiné à accueillir un élément en saillie de l'élément de moulage. L'élément en creux prend la forme d'une rainure ou d'une cavité cylindrique, sphérique, ou polyédrique.

Selon une deuxième variante, les moyens de maintien comprennent au moins un élément en creux et un élément rapporté logé dans ledit élément en creux de manière à former une saillie à la surface de la jonction, la saillie étant destinée à être insérée dans un élément en creux de l'élément de moulage.

Ainsi, le maintien de l'insert par rapport à l'élément de moulage est amélioré. De plus, l'élément en creux permet de minimiser le volume de la première partie du deuxième motif.

Selon un deuxième objet, l'invention propose un élément de garniture destiné à être rapporté dans un moule de cuisson pour pneumatiques caractérisé en ce qu'il comprend un insert selon un premier objet de l'invention.

Selon un troisième objet, l'invention propose un procédé de fabrication d'un insert destiné à entrer dans la composition d'un élément de garniture, dans lequel on fabrique un insert selon le premier objet de l'invention.

De préférence, on fabrique l'insert au moyen d'un procédé de consolidation sélective par fusion.

Selon un quatrième objet, l'invention propose un procédé de fabrication d'un élément de garniture destiné à être rapporté dans un moule de cuisson pour pneumatiques, dans lequel :
- on fabrique un insert selon un procédé de fabrication d'un insert selon un troisième objet de l'invention,
- on joint l'élément de moulage du corps de l'élément de garniture à la jonction de l'insert.

Ainsi, l'élément de garniture est obtenu seulement en partie au moyen d'un procédé permettant la fabrication de motifs comportant des parois minces et des formes complexes, ce qui permet de réduire le coût de fabrication dudit élément par rapport à un élément de garniture produit intégralement au moyen dudit procédé. La qualité de moulage de l'élément de garniture est améliorée et toute surépaisseur de moulage, à laquelle l'état de la technique a recours, est superflue.

Selon un cinquième objet, l'invention propose un moule de cuisson pour pneumatiques caractérisé en ce qu'il comprend au moins un élément de garniture selon le deuxième objet de l'invention.

Selon un sixième objet, l'invention propose un procédé de fabrication de pneumatiques dans lequel on cuit un pneumatique dans un moule selon le cinquième objet de l'invention.

Enfin, selon un septième objet, l'invention propose un pneumatique destiné à être monté sur la jante d'une roue caractérisé en ce qu'il est obtenu par un procédé de fabrication selon le sixième objet de l'invention.

### Brève description des dessins

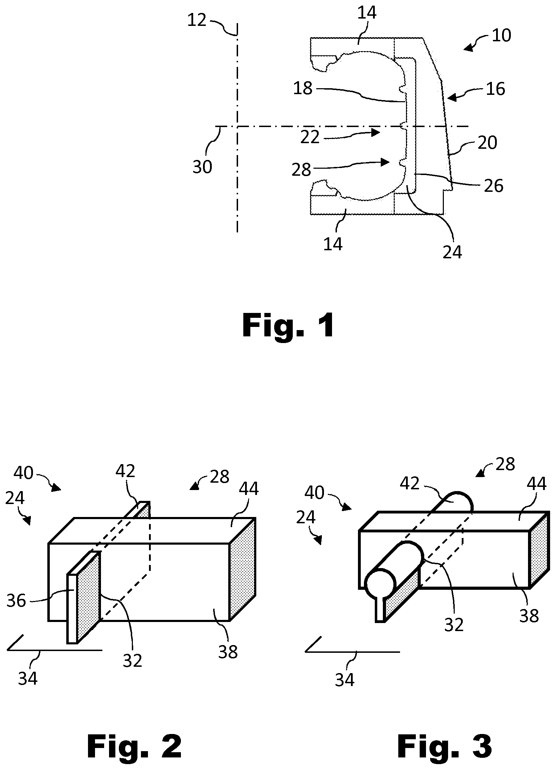

L'invention sera mieux comprise grâce à la suite de la description, qui s'appuie sur les figures suivantes :
- le figure 1 est une vue en coupe radiale d'un moule de cuisson pour pneumatiques ;
- la figure 2 est une vue en perspective de certains composants d'un moule de cuisson pour pneumatiques de l'état de la technique ;
- la figure 3 est une vue en perspective de certains composants du moule de la figure 2 ;
- la figure 4 est une vue en perspective de certains composants d'un moule de cuisson pour pneumatiques selon l'invention ;
- la figure 5 est une vue en perspective de certains composants du moule de la figure 4 ;
- la figure 6 est un vue de dessus de certains composants du moule de la figure 4 selon une première variante des moyens de maintien ;
- la figure 7 est un vue de dessus de certains composants du moule de la figure 4 selon une première variante des moyens de maintien ;
- la figure 8 est un vue de dessus de certains composants du moule de la figure 4 selon une première variante des moyens de maintien ;
- la figure 9 est un vue de dessus de certains composants du moule de la figure 4 selon une deuxième variante des moyens de maintien.

Sur les différentes figures, les éléments identiques ou similaires portent la même référence. Leur description n'est donc pas systématiquement reprise.

On a illustré, à la figure 1, un moule 10 pour la vulcanisation de pneumatiques. Le moule a une forme de révolution par symétrie d'axe central 12, et comprend notamment deux coquilles 14 et des secteurs 16. Les deux coquilles et les secteurs sont mobiles entre une position de fermeture, dans laquelle ils forment ensemble une surface interne de moulage, et une position d'ouverture, dans laquelle les deux coquilles et les secteurs sont éloignés de manière à permettre l'introduction ou l'extraction d'un pneumatique (non représenté).

Les deux coquilles 14 sont mobiles axialement et destinées à mouler les flancs d'un pneumatique. Les secteurs 16 sont mobiles radialement et destinés, d'une part, dans une position de fermeture du moule, à mouler tout ou partie de la sculpture du pneumatique par une surface de moulage 18 radialement interne, et, d'autre part, à coopérer avec des moyens de fermeture du moule, par une surface radialement externe 20, de manière à former, dans une position de fermeture du moule, un anneau fermement maintenue.

L'anneau formé par l'ensemble des secteurs comprend une garniture 22. La garniture supporte la surface de moulage 18 radialement interne. La garniture est formée de plusieurs éléments de garniture 24. Chaque secteur 16 comprend un ou plusieurs éléments de garniture montés de façon amovibles dans un logement 26 du secteur.

La surface de moulage 18 radialement interne de la garniture 22 comprend un ou plusieurs motifs. Par motif, on entend une forme en relief dont la fonction est technique et/ou esthétique. Les motifs sont en creux ou en protubérances. A titre d'exemple, les motifs en protubérance 28 forment des lames ou des lamelles, destinées à former, respectivement, des sillons ou des entailles sur la sculpture du pneumatique. Les lames s'étendent circonférentiellement et/ou axialement sur la surface de moulage 18.

Dans toute la suite et sauf indication contraire, une direction axiale désigne une direction parallèle à l'axe central 12, et une direction circonférentielle désigne une direction perpendiculaire à une direction radiale 30 du moule et à l'axe central.

On a illustré à la figure 2, la surface de moulage radialement interne d'un moule qui comporte des intersections 32 de motifs en protubérances. Par intersection, on entend l'interface formé par les motifs en protubérance qui se coupent.

Au moins un élément de garniture 24 comprend un corps 34 et au moins un insert 36. A titre d'exemple, chaque élément de garniture comprend plusieurs inserts. Le corps de l'élément de garniture comprend un ou plusieurs éléments de moulage 38 en venue de matière avec le corps. Les inserts et les éléments de moulage forment la surface de moulage de l'élément de garniture 24.

L'insert 36 forme tout ou partie d'un ou plusieurs motifs comportant des parois minces ou des formes complexes. Par « paroi mince », on entend une partie d'un motif en forme de saillie, de rétrécissement ou de bande étroite dont l'épaisseur est inférieure à 2,5 mm et, de préférence, à 1,5 mm. Par « forme complexe », on entend, par exemple, des formes comportant des contre-dépouilles, des formes avec des variations de section continues, des formes qui suivent la courbure du profil circonférentiel ou radial du moule, des formes présentant des ondulations, ou des combinaisons de ces différentes formes.

L'insert 36 peut être obtenu par tout procédé adéquat, par exemple, un procédé d'usinage ou un procédé de déformation plastique tel l'emboutissage.

De préférence, l'insert est obtenu par un procédé de fabrication additive qui permet de limiter la consommation de matériau contrairement à un procédé d'usinage. Encore plus préférentiellement, l'insert est fabriqué par un procédé de consolidation sélective par fusion qui permet l'obtention de formes complexes comportant des contre-dépouilles contrairement à un procédé ayant recours à une matrice ou un moule.

Par « fabrication additive », on entend un procédé de fabrication par ajout de matière.

Par « consolidation sélective par fusion », on entend un procédé de fabrication additive visant à agréger ou agglomérer progressivement et sélectivement, une amenée de matière d'oeuvre entrante de manière à obtenir une matière d'oeuvre sortante. La matière d'oeuvre entrante prend la forme et/ou rentre dans la composition d'une poudre, d'un fil ou d'une solution/bain. La matière d'oeuvre entrante est généralement amenée par dépôt d'une poudre sur un support de manière à former une couche. Le support prend la forme d'un plateau ou d'une couche précédemment agglomérée. L'agglomération est généralement obtenue par solidification de la matière d'oeuvre entrante qui est entrée en fusion totale ou partielle (frittage) par un apport localisé ou généralisé d'énergie, puis refroidie. L'apport d'énergie est généralement réalisé par un laser ou par un faisceau d'électrons, bien qu'il puisse être réalisé par induction ou rayonnement infrarouge. Dans le cas du laser et du faisceau d'électrons, la localisation de l'apport d'énergie est obtenue par des moyens d'orientation de l'apport d'énergie comme, respectivement, des moyens optiques ou électromagnétiques. Le procédé confère à la matière d'oeuvre entrante une forme et des caractéristiques mécaniques prédéterminées. Ladite forme et lesdites caractéristiques sont fonctions du matériau de la matière d'oeuvre entrante et de paramètres du procédé. Ladite forme est généralement un solide monobloc, bien qu'elle puisse être constituée de plusieurs solides monoblocs.

Le corps 34 de l'élément de garniture est obtenu, de préférence, par un procédé de fonderie comprenant une étape de moulage dudit corps. Un procédé de fonderie permet la réalisation de grandes séries d'éléments à un coût faible. Le corps de l'élément de garniture peut également être obtenu par tout procédé adéquat, tel l'usinage ou la fabrication additive.

Lors de l'étape de moulage du corps 34 de l'élément de garniture, on coule un matériau en fusion ou un matériau liquide dans un moule à élément de garniture (non représenté). Les inserts entrent dans la composition du moule à éléments de garniture. Le corps de l'élément de garniture est surmoulé autour de la base des inserts, puis le moule à éléments de garniture, excepté les inserts, est détruit pour libérer l'élément de garniture avec lesdits inserts.

A titre d'exemple, l'insert peut également être assemblé avec le corps de l'élément de garniture obtenu indépendamment de l'insert, par des moyens d'assemblage, tels des moyens d'assemblage vissés, des moyens d'assemblage par soudage ou encore, par des moyens d'accrochage telle une rainure en forme de queue d'aronde réalisée dans le corps de l'élément de garniture.

L'insert 36 et le corps 34 de l'élément de garniture 24 sont réalisés en tout matériau présentant des propriétés mécaniques, par exemple une rigidité, adaptés aux sollicitations rencontrées lors de l'utilisation du moule 10, et au procédé mis en oeuvre afin de les obtenir. A titre d'exemple, le matériau du corps de l'élément de garniture est choisi parmi l'acier, l'aluminium et leurs alliages ou encore, un matériau à base de résine. Le matériau de l'insert est choisi parmi l'acier et ses alliages.

On a illustré à la figure 2 et à la figure 3, l'intersection 32 de deux motifs en protubérance 28 sur la surface de moulage 40 d'un élément de garniture 24 de l'état de la technique. L'élément de garniture comprend un corps 34 et un insert 36. L'insert forme un premier motif. Un élément de moulage 38 en venue de matière avec le corps de l'élément de garniture est surmoulé contre l'insert. Le corps de l'élément de garniture forme un deuxième motif. L'intersection 32 entre le premier motif 42 et le deuxième motif 44 délimite la surface de contact entre l'insert et le corps de l'insert.

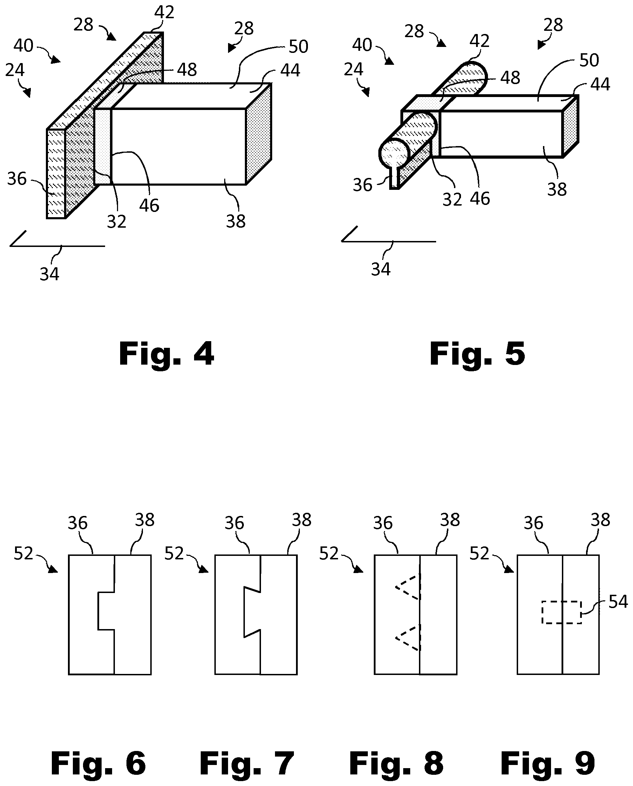

On a illustré à la figure 4 et à la figure 5, l'intersection 32 de deux motifs 28 sur la surface de moulage d'un élément de garniture selon l'invention. L'insert 36 comprend une jonction 46 destinée à être jointe avec un élément de moulage 38 en venue de matière avec le corps 34 de l'élément de garniture 24.

La jonction 46 divise le deuxième motif 44 en une première partie 48 et une deuxième partie 50. L'insert 36 forme le premier motif 42 et la première partie 48 du deuxième motif 44, et l'élément de moulage 38 forme la deuxième partie 50 du deuxième motif 44. La jonction 46 s'écarte de l'intersection 32.

De préférence, l'élément de moulage 38 est surmoulé sur la jonction 46. Dans ce cas, la forme de la jonction 46 est choisie de manière à ce que l'élément de moulage 38, surmoulé sur la jonction, ne comporte pas, au voisinage de la jonction, de parois minces et de formes complexes difficiles à mouler.

De préférence, la jonction 46 prend la forme d'une enveloppe de la surface de l'intersection. Par « enveloppe », on entend une surface de forme lisse et sensiblement plane couvrant l'intersection ou, autrement dit, la surface de l'intersection 32 aplatie.

La jonction 46 est disposée par rapport à la surface de l'intersection 32 de manière à minimiser le volume de la première partie 48 du deuxième motif 44.

De préférence, la jonction 46 est tangente à la surface de l'intersection 32, bien que la jonction puisse également être distante en absolu de l'intersection.

A titre d'exemple, la jonction 46 prend une forme plane, sensiblement perpendiculaire avec la direction longitudinale de l'élément de moulage, ou formant un angle compris dans un domaine allant de 0 à 20° avec ladite direction.

De préférence, l'élément de moulage 38 vient directement en contact avec la jonction 46 afin de minimiser les bavures qui peuvent survenir entre l'insert 36 et ledit élément de moulage, lors d'une étape de cuisson d'un pneumatique. L'élément de moulage 38 peut également être distant de l'insert de manière à avoir un jeu de fonctionnement inférieur ou égal à 1 mm et, de préférence, inférieur ou égal à 0,5 mm. Ainsi, le jeu de fonctionnement se comble lors de la mise en température du moule par la dilatation différentielle des matériaux constituant l'insert 36 et le corps 34 de l'élément de garniture, et les sollicitations internes de l'élément de garniture 24 sont réduites.

L'insert 36 comporte des moyens de maintien 52 de l'insert par rapport à l'élément de moulage. Les moyens de maintien sont disposés sur la jonction 46, et comprennent au moins un élément en creux dans lequel un élément en saillie de l'élément de moulage 38 est destiné à s'insérer.

De préférence, l'élément en saillie est inséré dans l'élément en creux par surmoulage.

Selon une première variante illustrée aux figures 6, 7 et 8, l'élément en creux est disposé sur la surface de la jonction 46 de l'insert de manière à minimiser le volume dudit insert. A l'inverse, l'élément en creux peut être prévu sur la surface de l'élément de moulage 38 destinée à être jointe avec la jonction 46, de manière à faciliter, le cas échéant, le surmoulage du corps 36 de l'élément de garniture sur l'insert.

L'élément en creux peut prendre la forme d'une rainure (figure 6) dans laquelle l'élément de moulage du corps de l'élément de garniture est destiné à être surmoulé de manière à former une lame. A titre d'exemple, les deux faces opposées de la rainure peuvent être parallèle, divergente (queue d'aronde, figure 7), ou convergente. Le fond de la rainure prend, par exemple, une forme bombée ou plane.

L'élément en creux peut également prendre la forme d'une ou plusieurs cavités (figure 8). La cavité a un contour fermé circulaire ou polygonal, et s'étend de manière à prendre une forme cylindrique, sphérique, ou polyédrique et, notamment, prismatique.

Selon une deuxième variante illustrée à la figure 9, les moyens de maintien comprennent un élément rapporté 54 logé dans l'élément en creux de l'insert. L'élément rapporté dans l'insert forme ainsi une saillie à la surface de la jonction. L'élément de moulage est ainsi surmoulé autour de l'élément rapporté en saillie.

D'autres variantes et modes de réalisation de l'invention peuvent être envisagés sans sortir du cadre de ces revendications.

## Revendications

1. Insert (36) destiné à entrer dans la composition d'un élément de garniture (24) d'un moule de cuisson pour pneumatiques, et à former une partie de la surface de moulage (40) dudit élément de garniture,
ladite surface de moulage comportant au moins une intersection (32) d'au moins un premier motif (42) et un deuxième motif (44) en protubérance,
l'insert étant **caractérisé en ce qu'**il comprend une jonction (46) destinée à être jointe avec un élément de moulage (38) en venue de matière avec le corps (34) de l'élément de garniture,
la jonction (46) divisant le deuxième motif (44) en une première partie (48) et une deuxième partie (50), l'insert (36) formant le premier motif (42) et la première partie (48) du deuxième motif (44) et l'élément de moulage (38) formant la deuxième partie (50) du deuxième motif (44),
la jonction (46) s'écartant de l'intersection (32).

2. Insert selon la revendication précédente dans lequel la jonction (46) prend la forme d'une enveloppe de la surface de l'intersection (32).

3. Insert selon l'une des revendications précédentes dans lequel la jonction (46) est disposée par rapport à la surface de l'intersection (32) de manière à minimiser le volume de la première partie (48) du deuxième motif (44), ladite jonction étant, de préférence, tangente à l'intersection.

4. Insert selon l'une des revendications précédentes dans lequel la jonction (46) comprend des moyens de maintien (52) de l'insert (36) par rapport à l'élément de moulage (38).

5. Insert selon la revendication 4 dans lequel les moyens de maintien (52) de l'insert comprennent au moins un élément en creux destiné à accueillir un élément en saillie de l'élément de moulage (38).

6. Insert selon la revendication 5 dans lequel l'élément en creux prend la forme d'une rainure.

7. Insert selon la revendication 5 dans lequel l'élément en creux prend la forme d'une cavité cylindrique, sphérique, ou polyédrique.

8. Insert selon la revendication 4 dans lequel les moyens de maintien (52) comprennent au moins un élément en creux et un élément rapporté logé dans ledit élément en creux de manière à former une saillie à la surface de la jonction (46), la saillie étant destinée à être insérée dans un élément en creux de l'élément de moulage.

9. Elément de garniture (24) destiné à être rapporté dans un moule de cuisson (10) pour pneumatiques **caractérisé en ce qu'**il comprend un insert (36) selon l'une des revendications 1 à 8.

10. Procédé de fabrication d'un insert (36) destiné à entrer dans la composition d'un élément de garniture (24) d'un moule de cuisson pour pneumatiques, dans lequel on fabrique un insert selon l'une des revendications 1 à 8.

11. Procédé selon la revendication précédente dans lequel on fabrique l'insert (36) au moyen d'un procédé de consolidation sélective par fusion.

12. Procédé de fabrication d'un élément de garniture (24) destiné à être rapporté dans un moule de cuisson pour pneumatiques, dans lequel :
- on fabrique un insert (36) selon un procédé de fabrication d'un insert selon l'une des revendications 10 et 11,
- on joint l'élément de moulage (38) du corps (34) de l'élément de garniture à la jonction (46) de l'insert.

13. Moule de cuisson pour pneumatiques **caractérisé en ce qu'**il comprend au moins un élément de garniture (24) selon la revendication 9.

14. Procédé de fabrication de pneumatiques dans lequel on cuit un pneumatique dans un moule (10) selon la revendication 13.

## Patentansprüche

1. Einsatz (36), der dazu bestimmt ist, in den Aufbau eines Auskleidungselements (24) einer Vulkanisationsform für Reifen einzugehen und einen Teil der Formfläche (40) des Auskleidungselements zu bilden,
wobei die Formfläche mindestens einen Schnittbereich (32) mindestens eines ersten Musters (42) und eines zweiten erhabenen Musters (44) aufweist,
wobei der Einsatz **dadurch gekennzeichnet ist, dass** er eine Verbindungsstelle (46) umfasst, die dazu bestimmt ist, mit einem Formelement (38) verbunden zu werden, das einstückig mit dem Körper (34) des Auskleidungselements ist,
wobei die Verbindungsstelle (46) das zweite Muster (44) in einen ersten Teil (48) und einen zweiten Teil (50) teilt, wobei der Einsatz (36) das erste Muster (42) und den ersten Teil (48) des zweiten Musters (44) bildet und wobei das Formelement (38) den zweiten Teil (50) des zweiten Musters (44) bildet,
wobei die Verbindungsstelle (46) von dem Schnittbereich (32) beabstandet ist.

2. Einsatz nach dem vorhergehenden Anspruch, bei dem die Verbindungsstelle (46) die Form einer Hülle der Fläche des Schnittbereichs (32) annimmt.

3. Einsatz nach einem der vorhergehenden Ansprüche, bei dem die Verbindungsstelle (46) in Bezug auf die Fläche des Schnittbereichs (32) so angeordnet ist, dass das Volumen des ersten Teils (48) des zweiten Musters (44) minimiert ist, wobei die Verbindungsstelle den Schnittbereich bevorzugt tangiert.

4. Einsatz nach einem der vorhergehenden Ansprüche, bei dem die Verbindungsstelle (46) Haltemittel (52) zum Halten des Einsatzes (36) in Bezug auf das Formelement (38) umfasst.

5. Einsatz nach Anspruch 4, bei dem die Haltemittel (52) des Einsatzes mindestens ein vertieftes Element umfassen, das dazu bestimmt ist, ein vorspringendes Element des Formelements (38) aufzunehmen.

6. Einsatz nach Anspruch 5, bei dem das vertiefte Element die Form einer Nut annimmt.

7. Einsatz nach Anspruch 5, bei dem das vertiefte Element die Form eines zylindrischen, kugeligen oder vielflächigen Hohlraums annimmt.

8. Einsatz nach Anspruch 4, bei dem die Haltemittel (52) mindestens ein vertieftes Element umfassen und ein eingesetztes Element, das in dem vertieften Element so untergebracht ist, dass es einen Vorsprung an der Fläche der Verbindungsstelle (46) bildet, wobei der Vorsprung dazu bestimmt ist, in ein vertieftes Element des Formelements eingeführt zu werden.

9. Auskleidungselement (24), das zu bestimmt ist, in eine Vulkanisationsform (10) für Reifen eingesetzt zu werden, **dadurch gekennzeichnet, dass** es einen Einsatz (36) nach einem der Ansprüche 1 bis 8 umfasst.

10. Verfahren zur Herstellung eines Einsatzes (36), der dazu bestimmt ist, in den Aufbau eines Auskleidungselements (24) einer Vulkanisationsform für Reifen einzugehen, bei dem ein Einsatz nach einem der Ansprüche 1 bis 8 hergestellt wird.

11. Verfahren nach dem vorhergehenden Anspruch, bei dem der Einsatz (36) mittels eines Verfahrens zur selektiven Verfestigung durch Schmelzen hergestellt wird.

12. Verfahren zur Herstellung eines Auskleidungselements (24), das zu bestimmt ist, in eine Vulkanisationsform für Reifen eingesetzt zu werden, bei dem:
- ein Einsatz (36) nach einem Verfahren zur Herstellung eines Einsatzes nach einem der Ansprüche 10 und 11 hergestellt wird,
- das Formelement (38) des Körpers (34) des Auskleidungselements an der Verbindungsstelle (46) des Einsatzes verbunden wird.

13. Vulkanisationsform für Reifen, **dadurch gekennzeichnet, dass** sie mindestens ein Auskleidungselement (24) nach Anspruch 9 umfasst.

14. Verfahren zur Herstellung von Reifen, bei dem man einen Reifen in einer Form (10) nach Anspruch 13 vulkanisiert.

## Claims

1. Insert (36) designed to be incorporated in the composition of a fitting element (24) of a curing mould for tyres, and to form part of the moulding surface (40) of the said fitting element,
the said moulding surface comprising at least one intersection (32) of at least a first (42) and a second (44) projecting pattern,
the insert being **characterised in that** it comprises a junction (46) which is designed to be joined with a moulding element (38) integral with the body (34) of the fitting element,
the junction (46) dividing the second pattern (44) into a first (48) and a second (50) part, the insert (36) forming the first pattern (42) and the first part (48) of the second pattern (44), and the moulding element (38) forming the second part (50) of the second pattern (44),
the junction (46) going away from the intersection (32).

2. Insert according to the preceding claim wherein the junction (46) takes the form of an envelope of the surface of the intersection (32).

3. Insert according to one of the preceding claims, wherein the junction (46) is arranged relative to the surface of the intersection (32) such as to minimise the volume of the first part (48) of the second pattern (44), the said junction preferably being tangent to the intersection.

4. Insert according to one of the preceding claims, wherein the junction (46) comprises means (52) for retention of the insert (36) relative to the moulding element (38).

5. Insert according to claim 4, wherein the means (52) for retention of the insert comprise at least one recessed element which is designed to receive a protuberant element of the moulding element (38).

6. Insert according to claim 5, wherein the recessed element takes the form of a groove.

7. Insert according to claim 5, wherein the recessed element takes the form of a cylindrical, spherical or polyhedral cavity.

8. Insert according to claim 4, wherein the means (52) for retention comprise at least one recessed element and an added-on element which is accommodated in the said recessed element such as to form a protuberance on the surface of the junction (46), the protuberance being designed to be inserted in a recessed element of the moulding element.

9. Fitting element (24) which is designed to be added into a curing mould (10) for tyres, **characterised in that** it comprises an insert (36) according to one of claims 1 to 8.

10. Process for production of an insert (36) which is designed to be incorporated in the composition of a fitting element (24) of a curing mould for tyres, wherein an insert is produced according to one of claims 1 to 8.

11. Process according to the preceding claim, wherein the insert (36) is produced by means of a process of selective consolidation by fusion.

12. Process for production of a fitting element (24) which is designed to be added into a curing mould for tyres, wherein:
- an insert (36) is produced according to a process for production of an insert according to one of claims 10 and 11;
- the moulding element (38) of the body (34) of the fitting element is joined to the junction (46) of the insert.

13. Curing mould for tyres, **characterised in that** it comprises at least one fitting element (24) according to claim 9.

14. Process for production of tyres, wherein a tyre is cured in a mould (10) according to claim 13.
